# EUROPÄISCHE PATENTSCHRIFT

(11) **EP 2 233 366 B1**
(45) Veröffentlichungstag und Bekanntmachung des Hinweises auf die Patenterteilung: **26.03.2014**
(21) Anmeldenummer: 10152374.4
(22) Anmeldetag: 02.02.2010
(51) Int. Cl.: B60R 13/02, B60Q 3/04, B60Q 3/02

(54) **Hinterleuchtete genarbte Planware**
Backlit grained flat goods
Marchandise plane chagrinée et rétro-éclairée

(30) Priorität: 04.02.2009 DE 102009000605
(43) Veröffentlichungstag der Anmeldung: 29.09.2010
(73) Patentinhaber: Lisa Dräxlmaier GmbH, 84137 Vilsbiburg (DE)
(72) Erfinder: Schlemmer, Christian, 84034 Landshut (DE)
(74) Vertreter: HOFFMANN EITLE

(56) Entgegenhaltungen:
- DE-U1- 29 908 944
- FR-A1- 2 911 555
- JP-A- 2008 023 922
- US-A1- 2004 108 746
- US-B1- 6 468 629

## Beschreibung

### Gebiet der Erfindung

Die vorliegende Erfindung betrifft ein Dekorelement für Fahrzeuge mit einer Dekorschicht und einer Leuchtquelle und ein Verfahren zur Herstellung eines solchen Dekorelements.

### Beschreibung des Standes der Technik

Hinterleuchtete Knöpfe, Schalter und andere Bedienelemente sind bekannt. Hinterleuchtete Bedienelemente werden unter anderem im Fahrzeugbau eingesetzt, um Funktionselemente in Bauteilen, wie beispielsweise der Mittelkonsole, der Türinnenverkleidung oder der Instrumententafel visuell hervorzuheben. Häufig bilden solche Funktionselemente separate Einheiten, die, auch wenn sie sich in einem nicht hinterleuchteten Zustand befinden, als separate Elemente erkennbar sind und somit die Homogenität bzw. Gleichförmigkeit einer Oberfläche stören können.

Gleichzeitig findet sich in modernen Fahrzeugen immer häufiger eine sogenannte Ambiente-Beleuchtung. Dazu wird über Leuchtquellen, die in oder angrenzend an Interieurelemente vorgesehen sein können oder eine gezielte indirekte Beleuchtung von Interieurbauteilen ermöglichen, das Wohlbefinden der Insassen eines Fahrzeugs gesteigert.

Um Oberflächen zu hinterleuchten, die in einem unbehandelten Zustand kein oder nur wenig Licht durchlassen, beschreibt die US 2004/0017687 A1 eine perforierte hinterleuchtete Oberfläche und ein Verfahren zur Herstellung derselben. Hierbei werden in die Dekorschicht, beispielsweise aus Leder, Öffnungen eingebracht, und es wird eine Leuchtquelle aus Sicht eines Fahrgastes so hinter dem Leder angeordnet, dass von der Leuchtquelle ausgesandtes Licht durch die eingebrachten Öffnungen in den Fahrgastinnenraum scheint. Allerdings können die eingebrachten Öffnungen auch im nicht beleuchteten Zustand sichtbar sein, so dass sie den Eindruck einer homogenen Dekoroberfläche stören können. Ferner findet bei einer perforierten Oberfläche eine punktuelle Durchleuchtung statt. Dadurch sind die möglichen optischen Eigenschaften der hinterleuchteten perforierten Dekoroberfläche eingeschränkt und schwer an vielfältige Kundenanforderungen anpassen.

Die JP 2008 023922 A beschreibt ein Dekorelement mit zwei aufeinander geschichteten Dekorschichten und einer Lichtquelle, welche mittels Laser in die Dekorschichten eingebrachte Symbole durchleuchtet.

Die FR 2 911 555 A1 beschreibt ein Interieurteil für ein Fahrzeug, mit einer profilierten Dekoroberfläche, die lichtdurchlässige und lichtundurchlässige Zonen aufweist.

Die US 2004/0108746 A1 beschreibt eine Abdeckung, die eine lichtdiffundierende Struktur aufweist.

### Zusammenfassung der Erfindung

Es ist Aufgabe der Erfindung, ein Dekorelement und ein Verfahren zur Herstellung eines Dekorelements im Besonderen zur Verwendung im Automobilbereich bereitzustellen, dessen sichtbare Dekoroberfläche im Fall fehlender Hinterleuchtung nahezu homogen erscheint und im Fall der Hinterleuchtung verbesserte und flexibel anpassbare optische Eigenschaften aufweist.

"Homogen" bezeichnet im vorliegenden Fall nicht notwendigerweise eine glatte Oberfläche. Auch und gerade strukturierte Oberflächen spielen für die vorliegende

Erfindung eine wichtige Rolle. Vielmehr soll mit dem Begriff "Homogen" zum Ausdruck gebracht werden, dass eine Bearbeitung der Oberfläche, um eine Hinterleuchtung bzw. Durchleuchtung zu ermöglichen, die ursprüngliche Oberflächenstruktur möglichst wenig schädigt. Beispielsweise soll eine ursprünglich nicht hinterleuchtbare Lederschicht auch im hinterleuchtbaren Zustand bei fehlender Hinterleuchtung den typischen Ledercharakter aufweisen.

Die Aufgabe der Erfindung wird mit den Gegenständen der Ansprüche 1 und 6 gelöst. Vorteilhafte Ausgestaltungen folgen aus den jeweiligen Unteransprüchen.

Das erfindungsgemäße Dekorelement weist eine Dekorschicht und eine Leuchtquelle auf, die auf der Seite der Dekorschicht, die der Sichtseite der Dekorschicht abgewandt ist, angebracht wird. Als Dekormaterial kommen beispielsweise Tiefziehfolien (TPO, PVC, TPU als Kompakt- oder Schaumfolie, auch mit einem zwei- oder mehrschichtigen Aufbau) oder auch Planware (mit/ohne Textilrücken) zum Einsatz. Um eine zumindest teilweise Transparenz der Dekorschicht bei ausreichender Stabilität und Beanspruchbarkeit der Dekorschicht zu erzielen, weist die Dekorschicht eine Narbung auf. Die Narbung kann eine künstliche Narbung sein. Eine solche Narbung kann beispielsweise durch Prägen, durch ein Gieß- oder Sprühverfahren oder durch das Aufbringen von Tröpfchen hergestellt werden. Hierzu kann die Narbungsgebung durch das Auftragen von Tropfen, vorzugsweise mittels eines Druckverfahrens, auf ein Trägermaterial erfolgen. Künstliche Narbungen umfassen technische Narbungen, wie beispielsweise gleichmäßige Kästchenmuster oder unregelmäßige Lederimitatmuster. Die Narbung kann aber auch, beispielsweise bei einem Naturprodukt, bereits vorhanden sein. In diesem Fall ist die Narbung in der Regel ungleichmäßig. In jedem Falle werden durch die Narbung Bereiche von Narbentälern und Narbenbergen definiert. Vorzugsweise liegt die Narbungstiefe im Bereich von 0,1 bis 0,25 mm. Zur Verbesserung der optischen Eigenschaften der Dekorschicht und/oder zur Versiegelung und/oder zur Veredelung der Dekorschicht können die Narbenberge und/oder die Narbentäler zusätzlich beschichtet sein. Hierfür können z.B. transparente Lacke (zur Versiegelung und zur Verbesserung der Lichtstreuung) verwendet werden, es können aber auch Lacke mit besonderen Spiegel- oder Reflektionseigenschaften (z.B. Metalllacke) zum Einsatz kommen. Die Beschichtung kann je nach Ausführungsform direkt bei oder nach der Herstellung der Dekorschicht oder aber erst am ansonsten komplett fertig gestellten Dekorelement erfolgen. In einem weiteren Verfahrensschritt wird die Dekorschicht zumindest teilweise so ausgedünnt, dass die Dekorschicht im Bereich von Narbenbergen keine oder lediglich eine Resttransparenz und im Bereich von Narbentälern eine dazu erhöhte Lichttransparenz aufweist. Es wird angestrebt, dass die Dekorschicht an den dicksten Stellen nicht lichtdurchlässig ist. Allerdings kann eine gewisse Resttransparenz in Abhängigkeit von z.B. Material oder Narbungsform nicht grundsätzlich ausgeschlossen werden. Eine solche Resttransparenz, beispielsweise von 15%, muss auch nicht ausgeschlossen werden, um den angestrebten optischen Eindruck zu erhalten. Hierbei wird entweder die natürliche Struktur der Dekorschicht oder eine künstlich eingebrachte Struktur so ausgenutzt, dass lichttransparente Bereiche, die in erster Linie durch die Struktur der Narbentäler definiert sind, ausgebildet werden. Die Narbenberge tragen zur Stabilisierung der Dekorschicht bei und lassen auch im hinterleuchteten Zustand kein oder nur wenig Licht durch. Der optische Eindruck der Dekorschicht bei einer Hinterleuchtung wird durch die Narbenstruktur, insbesondere die Anordnung der Narben und die Dickendifferenz des Materials zwischen Narbenbergen und Narbentälern, das Material der Dekorschicht, der Leuchtquelle, usw. bestimmt und kann somit gesteuert werden. Die eingebrachte künstliche oder die ursprünglich natürliche Oberflächenstruktur der Dekorschicht wird durch die Ausdünnung kaum beeinflusst und bietet somit eine optimale Homogenität. Dazu ist die Narbung vorzugsweise auf der Sichtseite der Dekorschicht vorgesehen.

Vorzugsweise erfolgt die Ausdünnung der Dekorschicht im Bereich der Narbentäler, um ein Durchscheinen an den Narbentälern zu maximieren und eine ausreichende Stabilität und Beanspruchbarkeit der Dekoroberfläche zu gewährleisten.

Die Ausdünnung erfolgt erfindungsgemäß durch ein Fräsverfahren, ein Schärfverfahren, ein Spaltverfahren, ein Schleifverfahren, ein Laserbearbeitungsverfahren und/oder durch Ziehen der Dekorschicht. Vorzugsweise umfasst das Ausdünnen der Dekorschicht ein Schärfspalten, das ein gängiges Verfahren zur Bearbeitung einer Dekorschicht ist und somit vorteilhaft zur Ausdünnung ausgenutzt werden kann.

Wenn das Ausdünnen der Dekorschicht ein Ziehen der Dekorschicht umfasst, wird die Dekorschicht auf einfache Weise ausgedünnt. Ein solcher Schritt kann notwendig sein, wenn nach dem Schärfen die Dekorschicht für eine Hinterleuchtung an den Stellen der Narbentäler noch zu dick ist. Bei farbpigmentierten Dekorschichten nimmt der Anteil der Farbpigmente im ausgedünnten Bereich ab. Die ausgedünnten Bereiche bleiben jedoch für das Auge des Betrachters im Wesentlichen unverändert, erst bei Hinterleuchtung ist die Lichtdurchlässigkeit dieser Bereiche erkennbar. Die Ausdünnung der Dekorschicht erfolgt beispielsweise bei einem Tiefziehen vor allem im Bereich der Narbentäler. Bei Standardtiefziehfolien werden die Narbentäler bei einem gewissen Verformungsgrad lichttransparent. Diese verbleibende Schicht ist teilweise sehr dünn (im µm - Bereich). In einer bevorzugten Ausführungsform kann daher die Standardfolie eine zweite oder mehrere, lichttransparente Schichten aufweisen, mit dem Ziel, dass die transparente Dicke in den Narbentälern erhöht wird. Durch eine gezielte Temperatursteuerung beim Tiefziehen, beispielsweise durch Anlegen einer Temperaturdifferenz zwischen Narbenbergen und Narbentälern, kann das Tiefziehen insbesondere im Bereich der Narbentäler gesteuert werden. Durch ein Tiefziehen der Dekorschicht wird die Dekorschicht ferner flexibilisiert, wodurch die Weiterverarbeit-barkeit, beispielsweise ein dreidimensionales Umformen der Dekorschicht, vereinfacht wird.

Vorzugsweise werden das Schärfspalten und das Tiefziehen kombiniert. Die Bearbeitungsschritte der gezielten Formschärfspaltung und des geringen Streckungsgrads des Tiefziehens, beispielsweise unter Verwendung eines HPF-Thermoformens, ermöglichen eine gleichmäßige Ausdünnung in den Narbentälern.

Vorzugsweise wird in einem weiteren Verfahrensschritt die Dekorschicht auf einem Träger aufgebracht, wodurch das Dekorelement stabilisiert und modularisiert wird.

Vorzugsweise wird auf der der Sichtseite der Dekorschicht abgewandten Seite eine Zwischenschicht vorgesehen, die als Unterware bezeichnet wird. Durch die Struktur und Art der Zwischenschicht kann der Durchleuchtungseindruck gesteuert werden. Beispielsweise kann die Zwischenschicht Dickensprünge aufweisen, bedruckt oder gefärbt sein, um Bereiche stärkerer und schwächerer Durchleuchtung zu definieren. Die Zwischenschicht ist vorzugsweise eine Haptikschicht. Auf diese Weise kann ein weiches Dekorelement hergestellt werden, wie es im Fahrzeugbau eingesetzt wird. Dazu eignet sich eine Haptikschicht aus Textil oder Vlies.

Wird die Haptikschicht zwischen Leuchtquelle und Dekorschicht angebracht, ist die Haptikschicht vorzugsweise transparent oder zumindest teiltransparent, um die Hinterleuchtung des Dekorelements zu vereinfachen. In anderen Ausführungsformen kann die Haptikschicht perforiert sein oder Aussparungen an der Stelle einer oder mehrerer Leuchtquellen aufweisen. Zur Anpassung des optischen Eindrucks bei Hinterleuchtung kann die Haptikschicht farbig sein oder es kann eine weitere Schicht vorgesehen sein, welche die optische Erscheinung der Hinterleuchtung beeinflusst. Darüber hinaus kann die Haptikschicht auch Strom leitend sein. Das Anbringen der Haptikschicht kann am einem ebenen oder an einem bereits vorgeformten Dekorschichtzuschnitt erfolgen. Der Zuschnitt kann darüber hinaus auch bereits ausgedünnt sein. Alternativ ist es denkbar, die Dekorschicht mit bereits angebrachter Haptikschicht auszudünnen.

Vorzugsweise weist das Dekorelement zumindest eine Verdunklungsschicht auf, wodurch ein störender optischer Eindruck der Dekorschicht bei fehlender Hinterleuchtung vermieden werden kann. In dem Falle, in dem die Dekorschicht auch bei fehlender Hinterleuchtung durchscheinend ist, kann ein störender optischer Eindruck durch eine schwarze oder farbige Verdunklungsschicht auf der der Sichtseite abgewandten Seite der Dekorschicht vermieden werden.

Vorzugsweise sind zwei oder mehrere Schichten des Dekorelements als Verbund ausgebildet, um das Dekorelement modular zu gestalten und damit einfacher und vielseitiger einsetzbar zu machen. Insbesondere kann die Dekorschicht, ggf. mit Verdunklungsschicht, und Haptikschicht als Verbund ausgebildet sein. Dazu können die verschiedenen Schichten verklebt sein, vorzugsweise mit einem transparenten Haftvermittler. Bei Verwendung moderner Leuchtquellen, wie beispielsweise einer Leuchtfolie oder eines Leuchtlacks, kann auch die Leuchtquelle mit einer Haptikschicht und/oder direkt mit der Dekorschicht als Verbund ausgebildet sein.

Als Leuchtquellen sind insbesondere Lichtleiter, Leuchtfolien, Leuchtlacke, LEDs oder OLEDs geeignet, die durch ihr geringes Gewicht, ihren geringen Platzbedarf und ihrer schwachen oder fehlenden Wärmeabstrahlung für die Verwendung mit Dekorelementen im Fahrzeugbau besonders geeignet sind.

Vorzugsweise besteht die Dekorschicht aus einer Folie, z. B. einer TPO-Folie. Insbesondere bei der Verwendung einer TPO-Folie hat sich herausgestellt, dass eine minimale Dicke der Dekorschicht von 0,02 bis 0,2 cm einen guten Kompromiss aus Hinterleuchtbarkeit und Stabilität der Dekorschicht darstellt. Die minimale Dicke ist hierbei die Dicke der Dekorschicht in den Narbentälern.

### Kurze Beschreibung der Figuren

Figur 1 zeigt den Querschnitt eines Dekorelements mit einer Dekorschicht aus Leder oder einem lederähnlichen Material, einer lichttransparenten Haptikschicht und Verdunklungsschichten.

Figuren 2A bis 2C zeigen ausgewählte Bearbeitungsschritte eines Dekorelements aus einem mehrschichtigen Folienaufbau.

Figuren 3A bis 3C zeigen ausgewählte Bearbeitungsschritte einer Dekorschicht mit einer Polymerschicht.

Figur 4 zeigt den Querschnitt einer Dekorschicht aus einer TPO-Folie, bei der Material bevorzugt im Bereich der Narbentäler mittels Schärfen abgetragen ist.

Figur 5 ist ein Foto, das eine Vergrößerung einer genarbten hinterleuchteten Oberfläche zeigt.

Figur 6 zeigt den Querschnitt einer Dekorschicht auf einem Trägermaterial gemäß einer weiteren Ausführungsform.

Figur 7 zeigt den Querschnitt durch eine Dekorschicht mit beschichteten Narbenbergen.

### Wege zur Ausführung der Erfindung

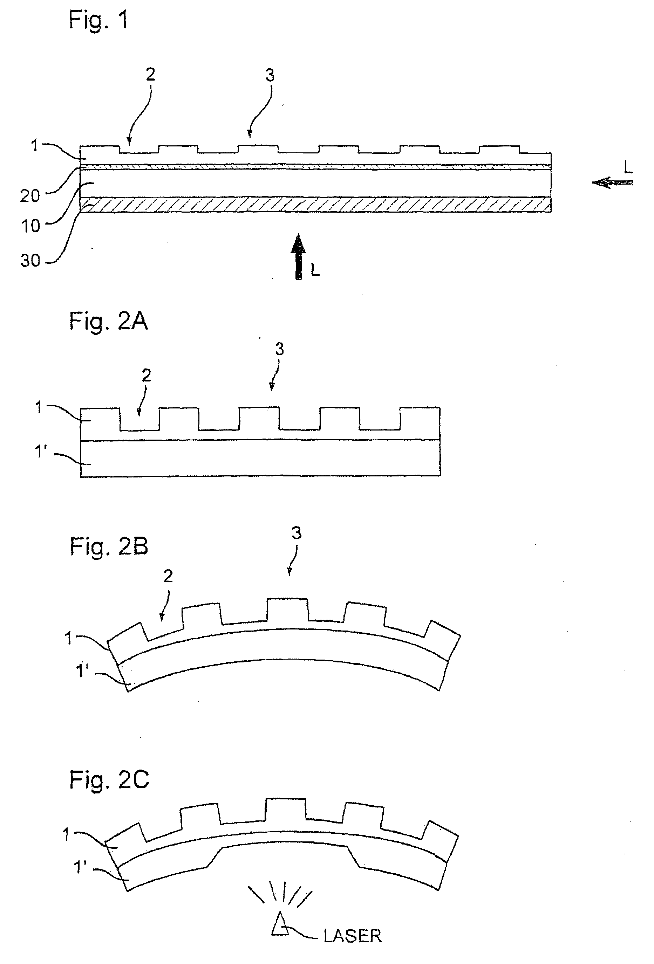

Figur 1 zeigt den Schichtaufbau eines Dekorelements mit einer Dekorschicht 1 aus einem Ledermaterial, einem lederähnlichen Material, einer Folie oder einem anderen geeigneten Material. Die Dekorschicht 1 weist Plateaubereiche, d. h. Narbenberge 3 und Narbentäler 2, auf. Auf der der Sichtseite der Dekorschicht 1 abgewandten Seite ist eine Verdunklungsschicht 20 vorgesehen, die in einer einfachen Ausführungsform eine dunkle Farbe aufweist, dabei dennoch transparent ist. In einer anderen Ausführungsform weist die Verdunklungsschicht 20 keine Dauerverdunklungseigenschaften auf, sondern kann ihre Transparenz und/oder Farbe, beispielsweise durch Anlegen einer Spannung, verändern. Auf der Seite der Verdunklungsschicht 20, die der Dekorschicht 1 gegenüberliegt, ist eine Zwischenschicht 10 vorgesehen, die beispielsweise eine Folie, ein formstabiler Träger oder ein transparentes Textil oder Vlies sein kann. Ggf. kann eine weitere Verdunklungsschicht 30 so vorgesehen sein, dass die beiden Verdunklungsschichten 20 und 30 die Zwischenschicht 10 einschließen. Die obigen Schichten bilden einen Schichtverbund.

Zur Hinterleuchtung bzw. Durchleuchtung des Verbunds kann eine Leuchtquelle auf der der Sichtseite abgewandten Seite des Verbunds angeordnet sein, so dass Licht, wie es durch einen Pfeil von unten nach oben in der Figur 1 gezeigt ist, abgestrahlt wird. Alternativ kann Licht seitlich eingestrahlt werden, wodurch sich das Dekorelement an verschiedene Umgebungen anpassen lässt. Wird Licht seitlich eingestrahlt, wie es in der Figur 1 gezeigt ist, weist die lichttransparente Schicht 10 vorzugsweise neben Licht leitenden Eigenschaften auch Streueigenschaften auf, so dass eine vorzugsweise flächige Hinterleuchtung der Dekorschicht 1 stattfinden kann.

Die Figuren 2A bis 2C zeigen einen zweischichtigen Folienaufbau, der als Dekorschicht 1, 1' verwendet werden kann. Darin ist eine genarbte Außenschicht 1 mit Narbentälern 2 und Narbenbergen 3 und eine transparente Schicht 1' gezeigt. Die beiden Schichten können beispielsweise aus TPO-Folien, PVC-Folien, TPU-Folien, PU-Folien, Schaumfolien, jeweils auch mit unterschiedlichen Färbungen oder dergleichen gebildet sein. Eine erste Ausdünnung der Folie erfolgt durch ein Tiefziehen und/oder dreidimensionales Umformen, wie es in der Figur 2B dargestellt ist. Anschließend kann mittels einer Laserbearbeitung auf der Rückseite des Verbunds 1, 1' ein kontrolliertes Abtragen von Material erfolgen, wodurch das endgültige Transparenzverhalten - in erster Linie im Tal - der Dekorschicht 1, 1' festgelegt wird (Fig. 2C). Die Laserbearbeitung kann vollflächig oder partiell erfolgen. Die Laserbearbeitung kann am Halbzeug oder am Formteil erfolgen.

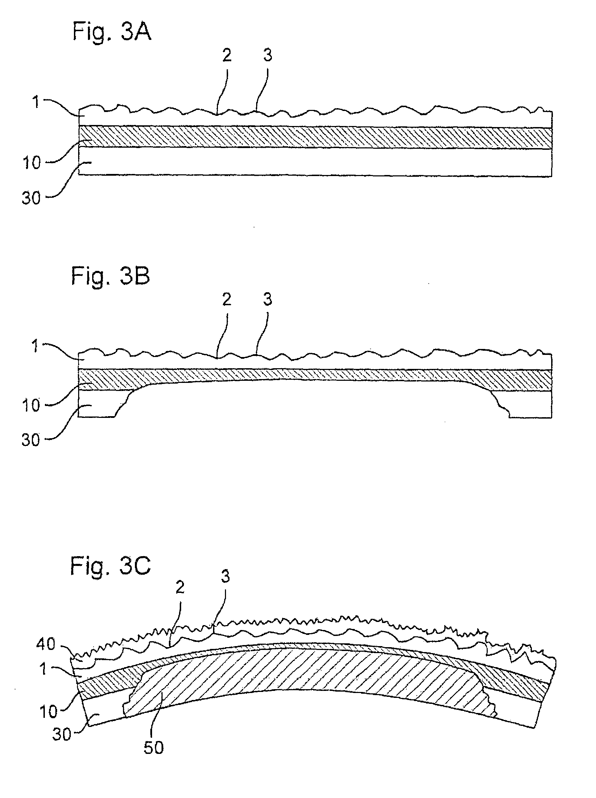

Eine weitere Ausführungsform, bei der eine Polymerschicht mit einer unregelmäßig genarbten Oberfläche für eine Dekorschicht verwendet wird, ist in den Figuren 3A bis 3C gezeigt. Der Aufbau ist dreischichtig und weist eine Dekorschicht 1, eine teil- oder vollständig transparente Zwischenschicht 10 und eine nicht- oder teiltransparente Schicht 30 auf. Die Dekorschicht 1 weist unregelmäßig angeordnete und ausgebildete Narbentäler 2 und Narbenberge 3 auf. In der vorliegenden Ausführungsform seien die folgenden Schichtdicken beispielhaft genannt: Dekorschicht 1 ungefähr 0,3 cm, teil- oder transparente Schicht 10 ungefähr 0,2 cm, nicht- oder teiltransparente Schicht 30 ungefähr 0,5 cm.

Die Figuren 3A bis 3C stellen verschiedene Bearbeitungsschritte des Dekorverbunds dar. Zunächst wird die Folie bzw. der Polymerverbund zugeschnitten. Anschließend erfolgt ein Formschärfspalten (Fig. 3B) gefolgt von einem Thermoformen des Verbunds (Fig. 3C), um dadurch eine zusätzliche Ausdünnung zu erreichen. Zur Stabilisierung kann danach eine Armierung oder Haptikschicht 50 auf der der Sichtseite des Verbunds abgewandten Seite aufgebracht werden. Zur Verbesserung der optischen Eigenschaften und/oder Versiegelung und/oder Veredelung der Dekorschicht 1 kann eine Licht streuende Schicht 40 auf der sichtbaren Oberfläche der Dekorschicht 1 aufgebracht werden. Diese Licht streuende Schicht 40 kann sich entweder nur in den Narbentälern 2 befinden oder sich über die gesamte Oberfläche verteilen. Die Licht streuende Schicht 40 kann farbig sein.

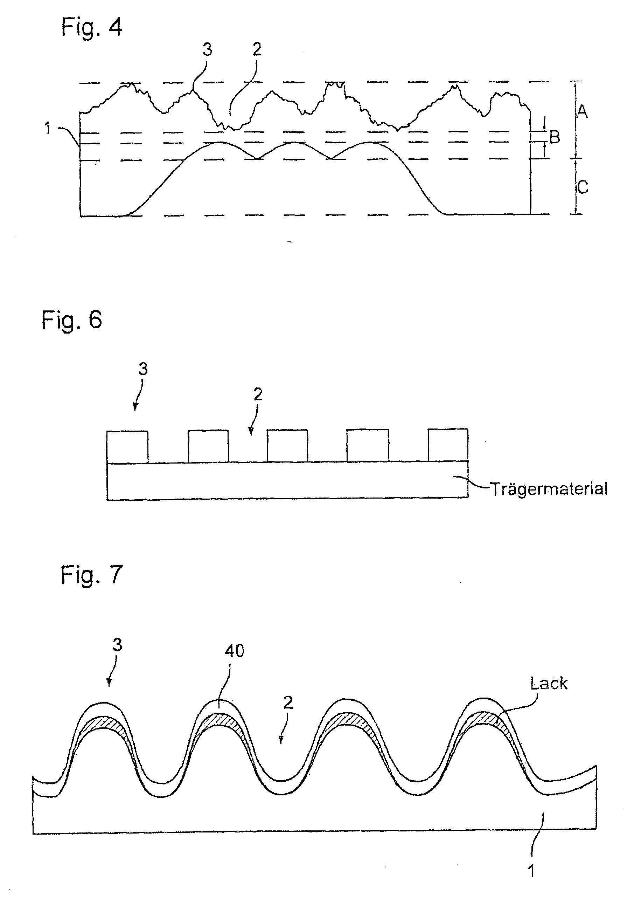

Vorzugsweise erfolgt das Abtragen von Material im Bereich der Narbentäler. Das ist beispielhaft in der Figur 4 gezeigt. Bei der Verwendung einer TPO-Folie haben sich für die Verwendung im Automobilbau die folgenden Schichtdicken als vorteilhaft herausgestellt. Der Maximalabstand A des hinterleuchteten Bereichs der Dekorschicht 1 beträgt hierbei etwa 0,45 cm. Der minimale Abstand B, d. h. die Restwandstärke der Dekorschicht 1, beträgt 0,02 bis 0,2 cm, um eine optimale Lichttransparenz bei ausreichender Stabilität der Dekorschicht zu erreichen. Im vorliegenden Beispiel wurde Material mit einer Dicke C von ca. 0,55 cm abgetragen.

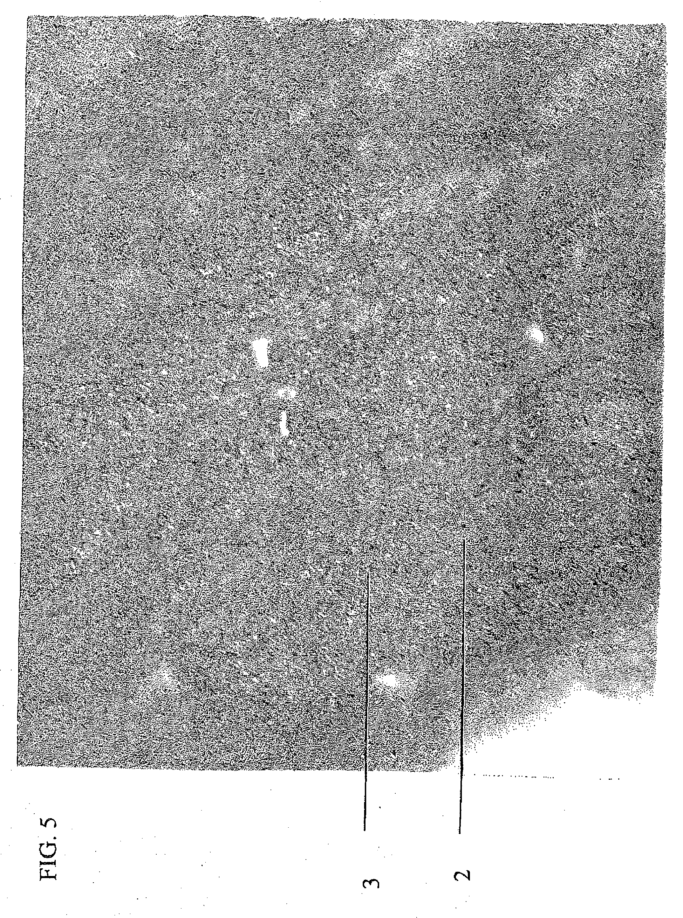

Figur 5 ist ein Foto und zeigt eine vergrößerte Draufsicht auf eine genarbte und durchleuchtete Dekorschicht. Gut zu erkennen sind die partielle Durchleuchtung im Bereich der Narbentäler (2) und die Narbenberge (3), die im Wesentlichen nicht durchleuchtet sind.

Figur 6 zeigt den Querschnitt durch eine Dekorschicht, die auf einem Trägermaterial aufgebracht ist, bei der die Erzeugung der Narbung durch das Auftragen von Tropfen, beispielsweise mittels eines Druckverfahrens, auf ein Trägermaterial erfolgt. Nach dem Aushärten der Tropfen bilden diese die Narbenberge 3. In den Narbentälern 2 befindet sich kein Material.

Figur 7 zeigt eine Dekorschicht 1 bei der die Narbenberge 3 zusätzlich mit einem Lack beschichtet sind. Bei dem Lack kann es sich um einen Spiegellack oder einen Metalllack handeln. Dadurch können besondere optische Effekte erzielt werden, da das Licht, das durch die Narbentäler 2 dringt, auf die lackierten Narbenberge 3 trifft und dort reflektiert oder gestreut wird. Dazu weisen die Narbentäler vorzugsweise keine solche Lackschicht auf. Zusätzlich kann eine Versiegelungs- und/oder Lichtstreuschicht 40 auf das Dekormaterial aufgebracht werden.

## Patentansprüche

1. Verfahren zur Herstellung eines Dekorelements insbesondere für Fahrzeuge, mit einer Dekorschicht (1, 1') und einer Leuchtquelle, wobei das Verfahren die Schritte umfasst:
a) Herstellen oder Bereitstellen einer eine Sichtseite aufweisenden Dekorschicht (1, 1') mit einer Narbung (2, 3), wobei die Narbung Narbenberge (3) und Narbentäler (2) aufweist,
b) zumindest teilweises Ausdünnen der Dekorschicht (1, 1'), sodass die Dekorschicht (1, 1') im Bereich der Narbenberge (3) keine oder lediglich eine Resttransparenz und im Bereich der Narbentäler (2) eine dazu erhöhte Lichttransparenz aufweist,
c) Anbringen einer Beleuchtungseinrichtung auf der Seite der Dekorschicht (1, 1'), die der Sichtseite abgewandt ist, **dadurch gekennzeichnet, dass**
die Ausdünnung der Dekorschicht (1, 1') ein Schärfverfahren und/oder ein Spaltverfahren und/oder ein Fräsverfahren und/oder ein Schleifverfahren und/oder ein Laserbearbeitungsverfahren und/oder ein Ziehen der Dekorschicht (1, 1')umfasst.

2. Verfahren nach Anspruch 1, **dadurch gekennzeichnet, dass** die Ausdünnung der Dekorschicht (1, 1') hauptsächlich im Bereich von Narbentälern (2) erfolgt.

3. Verfahren nach einem der vorhergehenden Ansprüche, **dadurch gekennzeichnet, dass** die Narbung durch das Auftragen von Tropfen, vorzugsweise mittels eines Druckverfahrens, auf ein Trägermaterial erfolgt.

4. Dekorelement insbesondere für Fahrzeuge, mit einer eine Sichtseite aufweisenden Dekorschicht (1, 1') und einer Leuchtquelle, die auf der der Sichtseite der Dekorschicht abgewandten Seite vorgesehen ist, wobei die Dekorschicht (1, 1') eine Narbung (2, 3) mit Narbenbergen (3) und Narbentälern (2) aufweist und die Dekorschicht (1, 1') so ausgedünnt ist, dass die Dekorschicht im Bereich von Narbenbergen (3) keine oder lediglich eine Resttransparenz und im Bereich von Narbentälern (2) eine dazu erhöhte Lichttransparenz aufweist, **dadurch gekennzeichnet, dass**
die Ausdünnung der Dekorschicht (1, 1') mittels Schärfen und/oder Spalten und/oder Fräsen und/oder Schleifen und/oder Lasern und/oder Ziehen der Dekorschicht (1, 1') erfolgt ist.

5. Dekorelement nach Anspruch 4, **dadurch gekennzeichnet, dass** die Dekorschicht (1, 1') auf einem Träger aufgebracht ist.

6. Dekorelement nach Anspruch 4 oder 5, **dadurch gekennzeichnet, dass** das Dekorelement eine Zwischenschicht (10) auf der der Sichtseite abgewandten Seite der Dekorschicht (1, 1') umfasst, wobei die Zwischenschicht (10) vorzugsweise eine Haptikschicht ist.

7. Dekorelement nach Anspruch 6, **dadurch gekennzeichnet, dass** die Zwischenschicht (10) eine lichttransparente Schicht ist und zwischen Beleuchtungseinrichtung und Dekorschicht (1, 1') angeordnet ist.

8. Dekorelement nach einem der Ansprüche 4 bis 7, **dadurch gekennzeichnet, dass** das Dekorelement zumindest eine Verdunklungsschicht (20, 30) aufweist, wodurch ein störender optischer Eindruck des Dekorelements bei fehlender Hinterleuchtung vermieden wird.

9. Dekorelement nach einem der Ansprüche 4 bis 8, **dadurch gekennzeichnet, dass** zwei oder mehr Schichten des Dekorelements als Verbund ausgebildet sind.

10. Dekorelement nach einem der Ansprüche 4 bis 9, **dadurch gekennzeichnet, dass** die Narbung auf der Sichtseite der Dekorschicht (1, 1') aufgebracht ist.

11. Dekorelement nach einem der Ansprüche 4 bis 10, **dadurch gekennzeichnet, dass** die Dekorschicht (1, 1') eine Folie, vorzugsweise eine TPO-Folie, umfasst.

12. Dekorelement nach einem der Ansprüche 4 bis 11, **dadurch gekennzeichnet, dass** die Dekorschicht (1, 1') eine minimale Dicke von 0,02 bis 0,2 mm aufweist.

13. Dekorelement nach einem der Ansprüche 4 bis 12, **dadurch gekennzeichnet, dass** zumindest ein Teil der Narbenberge (3) mit einem Lack, vorzugsweise einem Spiegellack oder einem Metalllack, beschichtet sind.

## Claims

1. Method for producing a decorative element, in particular for vehicles, having a decorative layer (1, 1') and a light source, wherein the method comprises the steps:
a) producing or providing a decorative layer (1, 1') having a viewing side with a grain (2, 3), wherein the grain has grain peaks (3) and grain troughs (2),
b) at least partial thinning-out of the decorative layer (1, 1'), so that the decorative layer (1, 1') in the region of the grain peaks (3) does not have transparency or only residual transparency and in the region of the grain troughs (2) has light transparency which is increased with respect to the latter,
c) attaching an illumination device to the side of the decorative layer (1, 1') which is
facing away from the viewing side,
**characterised in that**
the thinning-out of the decorative layer (1, 1') comprises a sharpening process and/or a splitting process and/or a milling process and/or a grinding process and/or a laser-machining process and/or drawing of the decorative layer (1, 1').

2. Method according to claim 1, **characterised in that** the thinning-out of the decorative layer (1, 1') is effected mainly in the region of grain troughs (2).

3. Method according to one of the preceding claims, **characterised in that** the grain is effected by the application of drops, preferably by means of a printing process, to a support material.

4. Decorative element, in particular for vehicles, having a decorative layer (1, 1') with a viewing side and a light source which is provided on the side facing away from the viewing side of the decorative layer, wherein the decorative layer (1, 1') has a grain (2, 3) with grain peaks (3) and grain troughs (2) and the decorative layer (1, 1') is thinned out so that the decorative layer in the region of grain peaks (3) does not have transparency or only residual transparency and in the region of grain troughs (2) has light transparency which is increased with respect to the latter,
**characterised in that**
the thinning-out of the decorative layer (1, 1') is effected by means of sharpening and/or splitting and/or milling and/or grinding and/or laser-machining and/or drawing of the decorative layer (1, 1').

5. Decorative element according to claim 4, **characterised in that** the decorative layer (1, 1') is applied to a support.

6. Decorative element according to claim 4 or 5, **characterised in that** the decorative element comprises an intermediate layer (10) on the side of the decorative layer (1, 1') facing away from the viewing side, wherein the intermediate layer (10) is preferably a haptic layer.

7. Decorative element according to claim 6, **characterised in that** the intermediate layer (10) is a light-transparent layer and is arranged between illumination device and decorative layer (1, 1').

8. Decorative element according to one of claims 4 to 7, **characterised in that** the decorative element has at least one blackout layer (20, 30), as a result of which an interfering visual impression of the decorative element is avoided when there is no back-lighting.

9. Decorative element according to one of claims 4 to 8, **characterised in that** two or more layers of the decorative element are formed as a composite.

10. Decorative element according to one of claims 4 to 9, **characterised in that** the grain is applied to the viewing side of the decorative layer (1, 1').

11. Decorative element according to one of claims 4 to 10, **characterised in that** the decorative layer (1, 1') comprises a film, preferably a TPO film.

12. Decorative element according to one of claims 4 to 11, **characterised in that** the decorative layer (1, 1') has a minimum thickness of 0.02 to 0.2 mm.

13. Decorative element according to one of claims 4 to 12, **characterised in that** at least some of the grain peaks (3) are coated with a lacquer, preferably a mirror lacquer or a metal lacquer.

## Revendications

1. Procédé de fabrication d'un élément décoratif, en particulier pour des véhicules, avec une couche décorative (1, 1') et une source d'éclairage, ledit procédé comprenant les étapes suivantes :
a) fabrication ou préparation d'une couche décorative (1, 1') présentant une face visible avec un grainage (2, 3), ledit grainage présentant des reliefs (3) et des rides (2),
b) amincissement au moins partiel de la couche décorative (1, 1'), de telle manière que la couche décorative (1, 1') ne présente aucune transparence ou présente seulement une transparence résiduelle au niveau des reliefs (3) et une transparence lumineuse supérieure de ce fait au niveau des rides (2),
c) application d'un dispositif d'éclairage sur la face de la couche décorative (1, 1') distante de la face visible, **caractérisé en ce que**
l'amincissement de la couche décorative (1, 1') comprend un processus de parage et/ou un processus de refente et/ou un processus de fraisage et/ou un processus de ponçage et/ou un processus d'usinage laser et/ou un étirage de la couche décorative (1, 1').

2. Procédé selon la revendication 1, **caractérisé en ce que** l'amincissement de la couche décorative (1, 1') est principalement réalisé au niveau des rides (2).

3. Procédé selon l'une des revendications précédentes, **caractérisé en ce que** le grainage est réalisé par application de gouttes, préférentiellement au moyen d'un procédé d'impression sur un matériau support.

4. Elément décoratif, en particulier pour des véhicules, avec une couche décorative (1, 1') présentant une face visible et une source d'éclairage prévue sur la face distante de la face visible de la couche décorative, la couche décorative (1, 1') présentant un grainage (2, 3) avec des reliefs (3) et des rides (2), et la couche décorative (1, 1') étant amincie de telle manière que ladite couche décorative ne présente aucune transparence ou présente seulement une transparence résiduelle au niveau des reliefs (3) et une transparence lumineuse supérieure de ce fait au niveau des rides (2),
**caractérisé en ce que**
l'amincissement de la couche décorative (1, 1') a été réalisé par parage et/ou refente et/ou fraisage et/ou ponçage et/ou usinage laser et/ou étirage de la couche décorative (1, 1').

5. Elément décoratif selon la revendication 4, **caractérisé en ce que** la couche décorative (1, 1') est appliquée sur un support.

6. Elément décoratif selon la revendication 4 ou 5, **caractérisé en ce que** l'élément décoratif comprend une couche intercalaire (10) sur la face distante de la face visible de la couche décorative (1, 1'), ladite couche intercalaire (10) étant préférentiellement une couche haptique.

7. Elément décoratif selon la revendication 6, **caractérisé en ce que** la couche intercalaire (10) est une couche transparente à la lumière et **en ce qu'**elle est disposée entre le dispositif d'éclairage et la couche décorative (1, 1').

8. Elément décoratif selon l'une des revendications 4 à 7, **caractérisé en ce que** ledit élément décoratif comporte au moins une couche d'obscurcissement (20, 30), un effet optique désagréable de l'élément décoratif étant ainsi évité en cas d'absence de rétro-éclairage.

9. Elément décoratif selon l'une des revendications 4 à 8, **caractérisé en ce que** deux couches ou plus de l'élément décoratif sont réalisées comme couche composite.

10. Elément décoratif selon l'une des revendications 4 à 9, **caractérisé en ce que** le grainage est appliqué sur la face visible de la couche décorative (1, 1').

11. Elément décoratif selon l'une des revendications 4 à 10, **caractérisé en ce que** la couche décorative (1, 1') comprend un film, préférentiellement un film TPO.

12. Elément décoratif selon l'une des revendications 4 à 11, **caractérisé en ce que** la couche décorative (1, 1') présente une épaisseur minimale comprise entre 0,02 et 0,2 mm.

13. Elément décoratif selon l'une des revendications 4 à 12, **caractérisé en ce qu'**au moins une partie des reliefs (3) est revêtue d'un vernis, préférentiellement d'un vernis réfléchissant ou d'un vernis métallisé.
